# DEMANDE DE BREVET EUROPEEN

(11) **EP 4 283 157 A1**
(43) Date de publication de la demande: **29.11.2023**
(21) Numéro de dépôt: 23164448.5
(22) Date de dépôt: 27.03.2023
(51) Int. Cl.: F16F 1/38, F16F 1/02, F16C 29/00, F16C 29/04, F16C 31/04, F16C 23/08, F16C 11/12, B64C 11/00, B64D 45/00, B64C 13/18, B64C 27/57, B64D 31/06, B64C 27/00

(54) **ARTICULATION DÉFORMABLE ÉLASTIQUEMENT ET SYSTÈME MUNI D'UNE TELLE ARTICULATION**

(30) Priorité: 24.05.2022 FR 2204960
(71) Demandeur: Airbus Helicopters, 13725 Marignane Cedex (FR)
(72) Inventeur: JAUFFRET, Laurent, 13880 VELAUX (FR); BONNET, Paul, 13100 AIX EN PROVENCE (FR); VARGAS, Fabien, 13100 AIX EN PROVENCE (FR); LAMBERT, Christophe, 13190 ALLAUCH (FR)
(74) Mandataire: GPI Brevets

(57) **Abrégé**

La présente invention concerne une articulation déformable (1) élastiquement comportant une portion déformable (2) et une portion interne cylindrique (3) agencée en tout ou partie à l'intérieur d'une portion externe cylindrique (4), ladite portion déformable (2) étant solidaire de ladite portion interne cylindrique (3) et de ladite portion externe cylindrique (4), ladite portion interne cylindrique (3) étant mobile par rapport à ladite portion externe cylindrique (4), ladite articulation déformable (1) comportant une interface de liaison (5) agencée en tout ou partie à l'intérieur d'un alésage (6) de ladite portion interne cylindrique (3), ladite interface de liaison (5) comportant un arbre (7) connecté à ladite portion interne cylindrique (3), ledit arbre (7) s'étendant suivant une direction longitudinale (L1) traversant ledit alésage (6).

## Description

La présente invention concerne le domaine des articulations déformables élastiquement pour permettre notamment une absorption de vibrations. L'invention concerne également des systèmes munis d'au moins une articulation permettant de mesurer des efforts ou des moments transmis par cette ou ces articulations.

De manière générale, une articulation déformable élastiquement présente deux pièces métalliques agencées coaxialement l'une dans l'autre et séparées par un matériau élastomère élastiquement déformable. En outre, le matériau élastiquement déformable est généralement choisi pour sa capacité à amortir des vibrations par exemple produites par une machine ou un moteur et éviter leur transmission à un châssis porteur.

Par suite, de telles articulations déformables élastiquement permettent d'amortir des vibrations dans toutes les directions entre un premier organe et un second organe. Ces articulations ne permettent donc pas de laisser un degré de liberté ou de guider en translation le premier organe par exemple solidaire de la pièce métallique extérieure par rapport au second organe solidaire de la pièce métallique intérieure.

Tel que décrit dans le document EP1832780, le matériau élastomère peut présenter différentes formes et par exemple comporter une pluralité de bras espacés s'étendant radialement depuis un élément rigide intérieur jusqu'à un élément extérieur, éventuellement rigide.

Cependant comme précédemment, de tels bras déformables ne permettent pas de laisser un degré de liberté ou de guider en translation un premier organe par rapport à un second organe.

En outre, le document FR3017458 décrit quant à lui des systèmes permettant de mesurer des efforts ou des couples transmis par un organe d'extrémité à un arbre tournant. De tels systèmes présentent généralement un dispositif de mesure monté entre l'arbre tournant et l'organe d'extrémité.

Un tel dispositif de mesure est alors soumis à une force centrifuge importante lors du mouvement de rotation de l'arbre tournant ce qui peut être problématique pour la conception de ce dispositif de mesure, voire peut fausser les mesures relevées. Par ailleurs, ce dispositif de mesure étant en mouvement, l'analyse en temps réel des charges et des sollicitations transmises à l'arbre tournant est complexe à réaliser. Des moyens tournants permettant une alimentation en énergie électrique peuvent être nécessaires pour alimenter en énergie des senseurs pour conditionner les signaux mesurés ou encore des organes de communication sans fil.

Le document FR 2 480 374 A1 décrit un dispositif d'absorption de chocs et de vibrations de type silentbloc dans lequel un manchon 36 est agencé selon une liaison de type pivot-glissant avec un boulon 44.

Par suite, un tel silentbloc comporte à la fois un degré de liberté en translation et un degré de liberté en rotation selon un axe longitudinal du boulon 44.

Ce document FR 2 480 374 A1 décrit également que l'élément élastique annulaire 30 peut comporter plusieurs secteurs élastiques 31 éventuellement non jointifs. Dans ce cas, des espaces circonférentiels peuvent séparer deux secteurs élastiques 31.

De tels secteurs élastiques 31 peuvent dès lors être considérés comme étant des liens formant la portion déformable.

Le document US 3 113 769 A concerne quant à lui un autre dispositif de type silentbloc pour supporter des charges et absorber des vibrations au moyen d'un organe déformable élastiquement 22, 24. Cet organe déformable 22, 24 est ici sollicité en torsion lorsqu'une charge est appliquée axialement sur une surface 40 au moyen d'une liaison de type hélicoïdale entre un arbre 10 et une bague 16.

Par suite, un tel silentbloc comporte à la fois un degré de liberté en translation et en rotation selon un axe longitudinal de l'arbre 10.

Le document US 3 876 265 A décrit quant à lui un roulement à billes 10 comportant également une portion cylindrique déformable élastiquement 34 agencée en une bague cylindrique 14 et un logement 30. En outre, grâce à une pluralité de rangées de billes 20, un arbre 12 est alors libre à la fois en rotation et translation par rapport à la bague cylindrique 14.

Par suite, un tel roulement à billes 10 peut être considéré comme un silentbloc comportant à la fois un degré de liberté en translation et un degré de liberté en rotation selon un axe longitudinal de l'arbre 12.

Le document DE 10 2020 120126A1 décrit quant à lui l'utilisation de senseurs de déformations dans une portion déformable d'un silentbloc.

Le document US2020001926 décrit un support de véhicule avec une pluralité de liens reliant deux anneaux coaxiaux, ces liens étant agencés radialement entre les deux anneaux et décrivant des zigzags.

Le document US20180170532 décrit un système pour mesurer et atténuer des vibrations dans une structure telle qu'un aéronef et plus particulièrement un hélicoptère.

Le document FR2120131 divulgue quant à lui un autre type de support antivibration pour un rotor d'hélicoptère.

La présente invention a alors pour objet de proposer une articulation déformable élastiquement permettant de s'affranchir des limitations mentionnées ci-dessus. Une telle articulation est ainsi déformable dans son domaine élastique dans un repère fixe lié par exemple à une machine.

Un autre objet de l'invention est de fournir un système simple et sûr pour mesurer des efforts et des couples transmis à un arbre tournant. En outre, un tel système de mesure de sollicitations comporte au moins une articulation déformable élastiquement selon l'invention.

L'invention se rapporte donc à une articulation déformable élastiquement comportant une portion déformable et une portion interne cylindrique agencée en tout ou partie à l'intérieur d'une portion externe cylindrique, la portion déformable étant solidaire de la portion interne cylindrique et de la portion externe cylindrique, la portion interne cylindrique étant mobile par rapport à la portion externe cylindrique, l'articulation déformable comportant une interface de liaison agencée en tout ou partie à l'intérieur d'un alésage de la portion interne cylindrique, l'interface de liaison comportant un arbre connecté à la portion interne cylindrique, l'arbre s'étendant suivant une direction longitudinale traversant l'alésage.

Une telle interface de liaison comporte au moins un organe de guidage en translation parallèlement à la direction longitudinale, le ou les organes de guidage en translation étant agencés entre l'arbre et la portion interne cylindrique, l'arbre présentant un degré de liberté en translation par rapport à la portion interne cylindrique, le degré de liberté en translation étant orienté selon une direction de translation parallèle à la direction longitudinale.

En outre, la portion déformable comporte une pluralité de liens déformables, chaque lien déformable comportant une première extrémité solidaire de la portion interne cylindrique et une seconde extrémité solidaire de la portion externe cylindrique.

Selon l'invention, une telle articulation déformable est remarquable en ce que chaque lien déformable comporte une partie centrale agencée en concertina à au moins deux changements de direction.

Autrement dit, une telle interface de liaison permet de transmettre des efforts entre l'arbre et la portion interne cylindrique suivant des directions inscrites dans un plan perpendiculaire à la direction longitudinale de l'arbre. La portion déformable solidaire de la portion interne cylindrique et de la portion externe cylindrique permet quant à elle d'absorber, au moins partiellement, ces efforts en se déformant.

Par ailleurs, chaque lien s'étend sensiblement radialement entre sa première extrémité et sa seconde extrémité autour de la direction longitudinale.

De plus, chaque lien ne s'étend pas de manière rectiligne entre sa première extrémité et sa seconde extrémité, mais présente plusieurs changements de direction. Chaque lien peut ainsi s'étendre dans sa partie centrale en zigzag ou en accordéon. Ces changements de direction peuvent alors permettre d'amplifier les caractéristiques de déformation élastique de chaque lien dans la direction radiale correspondant à ce lien.

En outre, selon une première variante, la portion déformable, la portion interne cylindrique et la portion externe cylindrique peuvent former un ensemble monolithique homogène. Dans ce cas, la portion déformable, la portion interne cylindrique et la portion externe cylindrique sont alors fabriquées dans un même matériau. La forme particulière et l'épaisseur de la portion déformable peuvent alors permettre de conférer son caractère élastiquement déformable à la portion déformable. Un tel ensemble monolithique peut ainsi être réalisé dans un matériau métallique, en acier notamment, par exemple par un procédé de moulage, d'usinage ou encore de fabrication additive.

Selon une seconde variante, la portion déformable peut être formée dans un matériau distinct des matériaux de la portion interne cylindrique et la portion externe cylindrique. Dans ce cas, la portion déformable peut être formée par exemple dans un matériau élastomère adhérant avec la portion interne cylindrique et la portion externe cylindrique par exemple formées dans un matériau métallique, en acier notamment.

La portion interne cylindrique et la portion externe cylindrique sont définies respectivement par des bases, qui peuvent être par exemple de forme circulaire, carrée ou plus généralement polygonale, et par des génératrices passant par ces bases et étant agencées parallèlement à des axes.

En pratique, dans un état non sollicité de l'articulation déformable, les axes de la portion interne cylindrique et de la portion externe cylindrique peuvent être agencés parallèlement entre eux et avec la direction longitudinale, voire ils peuvent être confondus. Par ailleurs, si la portion interne cylindrique et la portion externe cylindrique présentent une géométrie de révolution alors la portion interne cylindrique comporte une base circulaire de rayon inférieur à celui de la base circulaire de la portion externe cylindrique.

En outre, ledit au moins un organe de guidage en translation peut comporter des éléments roulants, tels que des billes, interposés entre l'arbre et la portion interne cylindrique.

De telles billes peuvent être agencées suivant des rangées rectilignes d'au moins deux billes alignées parallèlement à la direction longitudinale de l'arbre. Par exemple, chaque rangée rectiligne de billes peut présenter cinq billes de même diamètre. Selon un exemple de réalisation, l'interface de liaison peut comporter au moins un groupe de cinq rangées rectilignes de billes agencées parallèlement à la direction longitudinale de l'arbre. Les rangées rectilignes de billes d'un groupe sont alors agencées de manière équirépartie en azimut autour de la direction longitudinale de l'arbre.

En outre, des gorges agencées parallèlement à la direction longitudinale de l'arbre peuvent être ménagées dans l'arbre pour permettre de maintenir en position et en azimut les rangées rectilignes de billes les unes par rapport aux autres.

Par ailleurs, chaque gorge présente une longueur suivant une direction parallèle à la direction longitudinale de l'arbre. Une telle longueur est alors supérieure au produit du diamètre des billes par le nombre de billes présentes dans une rangée rectiligne pour permettre un mouvement de translation relatif entre l'arbre et la portion interne cylindrique.

Selon un exemple de réalisation, l'interface de liaison peut comporter deux groupes de cinq rangées rectilignes de billes, chaque groupe étant agencé au niveau d'une extrémité de l'arbre.

Avantageusement, l'interface de liaison peut comporter au moins un organe de guidage en rotation autour d'au moins la direction longitudinale, le ou les organes de guidage en rotation étant agencés entre l'arbre et la portion interne cylindrique, l'arbre présentant au moins un degré de liberté en rotation par rapport à la portion interne cylindrique, ledit au moins un degré de liberté en rotation comportant au minimum un degré de liberté en rotation orienté selon une direction de rotation parallèle à la direction longitudinale.

En d'autres termes, une telle interface de liaison ne permet pas de transmettre un moment entre l'arbre et la portion interne cylindrique autour de la direction longitudinale de l'arbre. Un tel au moins un organe de guidage en rotation peut comporter un palier ou roulement présentant des éléments roulants, tels que des billes, interposés entre l'arbre et la portion interne cylindrique.

De telles billes peuvent être agencées suivant des rangées circulaires de plusieurs billes arrangées selon des cercles centrés sur la direction longitudinale de l'arbre. Par exemple, chaque rangée circulaire de billes peut présenter plusieurs billes jointives de même diamètre. Plus particulièrement, les organes de guidage en rotation peuvent présenter deux rangées circulaires de billes agencées entre une bague intérieure du roulement et une bague extérieure du roulement.

Une telle bague intérieure peut être solidaire d'un fourreau, ledit fourreau étant mobile en translation par rapport à l'arbre au moyen des organes de guidage en translation. Un tel fourreau peut comporter un épaulement extérieur, un diamètre extérieur et un filetage. La bague intérieure peut alors venir en recouvrement du diamètre extérieur en appui contre l'épaulement extérieur. Le filetage permet quant à lui de recevoir un écrou présentant un taraudage complémentaire pour serrer la bague intérieure sur le fourreau parallèlement à la direction longitudinale.

La bague extérieure peut être quant à elle solidaire de la portion interne cylindrique. La portion interne cylindrique peut ainsi comporter un épaulement intérieur, un alésage intérieur et un taraudage. La bague extérieure peut alors venir en recouvrement de l'alésage intérieur en appui contre l'épaulement intérieur. Le taraudage peut ainsi coopérer avec un écrou présentant un filetage complémentaire pour serrer la bague extérieure sur la portion interne cylindrique parallèlement à la direction longitudinale.

Selon une première alternative, le ou les organes de guidage en rotation peuvent permettre de guider en rotation l'arbre et la portion interne cylindrique uniquement autour de la direction longitudinale.

Dans ce cas, le fourreau et la portion interne cylindrique sont alors agencés en liaison de type pivot présentant un unique degré de liberté en rotation autour de la direction longitudinale.

Selon une seconde alternative, le ou les organes de guidage en rotation peuvent permettre de guider en rotation l'arbre et la portion interne cylindrique autour de la direction longitudinale et d'une première direction radiale, cette première direction radiale étant distincte, voire perpendiculaire, à la direction longitudinale.

Dans ce cas, le fourreau et la portion interne cylindrique sont alors agencés en liaison de type rotule à doigt présentant uniquement deux degrés de liberté en rotation autour de la direction longitudinale et de la première direction radiale.

Selon une troisième alternative, le ou les organes de guidage en rotation peuvent permettre de guider en rotation l'arbre et la portion interne cylindrique autour de la direction longitudinale, de la première direction radiale et d'une seconde direction radiale, cette seconde direction radiale étant distincte de, voire perpendiculaire à, la direction longitudinale et la première direction radiale.

Dans ce cas, le fourreau et la portion interne cylindrique sont alors agencés en liaison de type rotule présentant trois degrés de liberté en rotation autour de la direction longitudinale, de la première direction radiale et de la seconde direction radiale.

Avantageusement, la partie centrale de chaque lien déformable peut comporter successivement un premier flan incliné par rapport à une direction radiale s'étendant entre la première extrémité et la seconde extrémité, un tronçon intermédiaire parallèle à la direction radiale et un second flan incliné par rapport à la direction radiale. Le premier flan incliné forme ainsi un premier changement de direction avec le tronçon intermédiaire et le tronçon intermédiaire forme un second changement de direction avec le second flan incliné.

Par exemple, la partie centrale peut comporter quatre changements de direction. Le premier changement de direction est ainsi agencé entre le premier flan incliné et le tronçon intermédiaire. Le second changement de direction est agencé entre le tronçon intermédiaire et le second flan incliné. Chaque lien peut également présenter un troisième changement de direction est alors agencé entre la première extrémité et le premier flan incliné et un quatrième changement de direction est quant à lui agencé entre le second flan incliné et la seconde extrémité.

En pratique, la portion déformable peut comporter au moins deux premiers liens déformables agencés au niveau d'un premier côté de l'articulation et au moins deux seconds liens déformables agencés au niveau d'un second côté de l'articulation, les premier côté et second côté étant définis de part et d'autre d'un plan médian perpendiculaire à la direction longitudinale.

En d'autres termes, au moins deux groupes de plusieurs liens sont agencés de chaque côté du plan médian perpendiculaire à la direction longitudinale. Les liens d'un même groupe peuvent être avantageusement agencés de manière équirépartie autour de la direction longitudinale. Par exemple, lorsqu'un groupe comporte quatre liens les liens sont répartis angulairement à 90° les uns par rapport aux autres. Chaque groupe de lien est alors agencé dans un plan radial perpendiculaire à la direction longitudinale.

Selon un autre exemple de réalisation de l'invention, l'articulation peut comporter au moins une butée apte à limiter des déformations de la portion déformable.

Par exemple, cette ou ces butées peuvent être agencées entre le premier côté et le second côté. De telles butées permettent alors de rester dans le domaine élastique de la portion déformable et d'éviter toute déformation irréversible dans le domaine plastique de la portion déformable ou toute rupture de la portion déformable.

Avantageusement, ladite au moins une butée peut présenter une configuration choisie parmi le groupe comportant une première configuration dans laquelle au moins un patin est solidaire de la portion externe cylindrique et au moins une excroissance de révolution est solidaire de la portion interne cylindrique et une seconde configuration dans laquelle au moins un patin est solidaire de la portion interne cylindrique et au moins une excroissance de révolution est solidaire de la portion externe cylindrique.

Autrement dit, dans la première configuration un ou plusieurs patins sont rapportés et solidarisés à la portion externe cylindrique par collage ou encore par des moyens de solidarisation réversible tels que des vis. Un tel agencement des patins permet notamment d'utiliser des matériaux différents pour la portion externe cylindrique et la butée. Le matériau formant les patins de la butée peut ainsi présenter des caractéristiques d'amortissement ou de raideur distinctes de celles du matériau formant la portion externe cylindrique.

Par analogie dans la seconde configuration, un ou plusieurs patins sont rapportés et solidarisés à la portion interne cylindrique par collage ou encore par des moyens de solidarisation réversible tels que des vis. Des matériaux différents pour la portion interne cylindrique et la butée peuvent être utilisés. Le matériau formant les patins de la butée peut ainsi présenter des caractéristiques d'amortissement ou de raideur distinctes de celles du matériau formant la portion interne cylindrique.

En pratique, la portion externe cylindrique peut présenter un premier bord agencé du premier côté de l'articulation, un second bord agencé du second côté de l'articulation, au moins deux liaisons reliant le premier bord avec le second bord, les au moins deux liaisons définissant au moins deux évidements agencés de manière équirépartie en azimut autour d'un axe de révolution de la portion externe cylindrique.

Autrement dit, la portion externe cylindrique peut comporter, au niveau du premier bord et du second bord, des sections annulaires continues agencées dans des plans perpendiculaires à l'axe de révolution de la portion externe cylindrique. En revanche, au niveau des au moins deux liaisons, la portion externe cylindrique peut comporter une section annulaire discontinue agencée dans un plan perpendiculaire à l'axe de révolution de la portion externe cylindrique.

Cette discontinuité de la section annulaire permet alors par exemple l'introduction de patins rapportés pour former la butée entre la portion interne cylindrique et la portion externe cylindrique. Avantageusement, quatre liaisons peuvent être agencées entre le premier bord et le second bord.

De manière avantageuse, les au moins deux liaisons peuvent également être agencées de façon équirépartie en azimut autour de l'axe de révolution de la portion externe cylindrique.

Selon un autre exemple de réalisation de l'invention, l'articulation peut comporter des premiers senseurs de déformation agencés sur la portion déformable.

De tels premiers senseurs permettent alors de mesurer des déformations par exemple en traction, compression, flexion, cisaillement ou torsion de la portion déformable. De tels premiers senseurs peuvent notamment être rapportés par collage sur une face externe de la portion déformable.

Ces premiers senseurs génèrent chacun un signal représentatif d'une mesure de la déformation de la face sur laquelle ils sont rapportés respectivement. Un traitement des signaux issus des différents premiers senseurs permet ensuite d'en déduire la déformation globale de la portion déformable. Une telle déformation globale de la portion déformable peut ainsi consister à déterminer un déplacement relatif, et donc un effort transmis, entre l'axe de la portion externe cylindrique et l'axe de la portion interne cylindrique.

Avantageusement, la portion déformable comportant une pluralité de liens déformables, chaque premier senseur de déformation peut être rapporté sur une face d'un lien déformable.

Ainsi, les liens déformables peuvent être respectivement configurés pour recevoir chacun un premier senseur. Par exemple, chaque tronçon intermédiaire, parallèle à la direction radiale d'un lien déformable, peut présenter une face plane apte à recevoir une jauge de déformation formant un premier senseur et présentant deux bornes électriques et un circuit électrique relié à ces deux bornes, la résistance électrique aux bornes de la jauge variant avec la déformation de la face plane.

Comme déjà évoqué, la présente invention a aussi pour objet un système comportant au moins :
- un châssis,
- un carter d'une boîte de transmission de puissance coopérant avec le châssis,
- un arbre tournant mobile en rotation par rapport au carter autour d'un axe de rotation,
- un organe d'extrémité entraîné en rotation par l'arbre tournant, et
- un contrôleur configuré pour déterminer des sollicitations transmises à l'arbre tournant, les sollicitations étant générées lors du mouvement de rotation de l'organe d'extrémité.

Selon l'invention, un tel système est remarquable en ce qu'il comporte au moins une articulation déformable telle que décrite précédemment, l'articulation déformable étant agencée entre le châssis et le carter, les premiers senseurs de déformation agencés au niveau de la portion déformable de chaque articulation déformable étant reliés au contrôleur.

Le contrôleur peut comprendre par exemple au moins un calculateur, au moins un processeur et au moins une mémoire, au moins un circuit intégré, au moins un système programmable, au moins un circuit logique, ces exemples ne limitant pas la portée donnée à l'expression « contrôleur ». Le terme processeur peut désigner aussi bien une unité centrale de traitement connue sous l'acronyme CPU, une unité graphique de traitement GPU, une unité digitale connue sous l'acronyme DSP, un microcontrôleur...

Le contrôleur traite les signaux respectifs de chacun des premiers senseurs montés sur chaque articulation. Avantageusement, le système peut comporter par exemple trois articulations déformables.

En fonction des déformations des trois articulations, le contrôleur en déduit des efforts Fy1, Fz1 transmis par le carter au châssis au niveau de chaque articulation. Ces efforts Fy1, Fz1 sont ainsi mesurés dans un plan perpendiculaire à l'axe de rotation de l'arbre tournant.

A partir de ces efforts Fy1, Fz1 et connaissant la distance entre chaque articulation et l'axe de rotation, le contrôleur détermine alors en totalité un couple Mx2 autour de l'axe de rotation transmis par le carter au châssis. A partir du couple Mx2, le contrôleur en déduit alors le couple résistant généré par l'organe d'extrémité sur l'arbre tournant selon l'axe de rotation Axrot parallèle avec une première direction X.

Eventuellement, le contrôleur peut également déterminer en tout ou partie des efforts Fy2, Fz2 et des moments My2, Mz2 transmis par le carter au châssis. Les efforts Fy2, Fz2 sont orientés selon respectivement une deuxième direction Y et une troisième direction Z perpendiculaires d'une part par rapport à la première direction X et d'autre part entre eux. Les moments My2, Mz2 sont quant à eux orientés respectivement autour des deuxième et troisième directions Y et Z.

Par exemple, l'arbre tournant d'un tel système peut être un mât rotor entraînant en rotation une hélice ou un rotor muni de pales, tel une hélice équipant un aéronef, un avion ou un giravion. Le mouvement de rotation d'une hélice ainsi que les forces aérodynamiques auxquelles elle est soumise peuvent engendrer en effet des sollicitations importantes dans l'arbre tournant. Le système selon l'invention permet alors d'estimer sensiblement en temps réel de telles sollicitations dans l'arbre tournant, voire d'anticiper un risque de rupture ou d'endommagement de l'arbre tournant. Par suite, si les sollicitations dans l'arbre tournant dépassent une valeur de seuil prédéterminée, le contrôleur peut générer une alarme visuelle ou sonore permettant au pilote de l'aéronef d'agir sur des commandes de pilotage pour réduire ces sollicitations instantanément ou pour les maintenir dans un domaine acceptable.

Alternativement, un pilote automatique peut également recevoir un ordre de commande pour agir automatiquement sur les commandes de pilotage de manière à contenir les sollicitations dans un domaine privilégié ou les faire décroître rapidement.

En pratique, le système peut comporter au moins un palier de guidage en rotation de l'arbre tournant, ledit au moins un palier étant agencé dans une zone extérieure par rapport à une zone intérieure du carter, ledit au moins un palier étant monté dans un support annulaire, ledit au moins un palier étant agencé entre le carter et l'organe d'extrémité suivant une direction parallèle à l'axe de rotation.

Le ou les paliers de guidage en rotation sont ainsi déportés par rapport au carter. Le support annulaire permet de recevoir un palier de guidage formé par exemple par un roulement à billes comportant au moins une rangée circulaire de billes.

En pratique, le palier de guidage peut présenter deux rangées circulaires de billes en contact oblique avec une bague intérieure et une bague extérieure. La bague intérieure du palier de guidage est alors solidarisée à l'arbre tournant, la bague extérieure du palier de guidage est quant à elle solidarisée au support annulaire.

Selon un exemple de réalisation, le système peut comporter au moins deux biellettes, lesdites au moins deux biellettes étant par exemple agencées de manière équirépartie en azimut autour de l'axe de rotation de l'arbre tournant, chaque biellette comportant une tête liée avec le support annulaire et un pied lié avec le châssis, chaque tête présentant au moins un degré de liberté en rotation avec le support annulaire, chaque pied présentant au moins un degré de liberté en rotation avec le châssis, ledit au moins un degré de liberté en rotation de la tête et ledit au moins un degré de liberté en rotation du pied d'une même biellette étant respectivement orientés selon deux directions parallèles entre elles et perpendiculaires à l'axe de rotation de l'arbre tournant.

Selon un exemple particulier de l'invention, le système peut comporter quatre biellettes réparties angulairement à 90° deux à deux les unes par rapport aux autres autour de l'axe de rotation de l'arbre tournant.

En pratique, chaque pied peut présenter trois degrés de liberté en rotation avec le châssis. Les biellettes sont ainsi agencées respectivement en liaison de type rotule avec le châssis au niveau de leur pied respectif.

Chaque tête peut présenter trois degrés de liberté en rotation avec le support annulaire. Les biellettes sont ainsi agencées respectivement en liaison de type rotule avec le support annulaire au niveau de leur tête respective.

Avantageusement, le système peut comporter au moins un second senseur de déformation agencé sur au moins une biellette, ledit au moins un second senseur de déformation étant relié audit au moins un contrôleur.

Ainsi, au moins une biellette peut être configurée pour recevoir un second senseur. Eventuellement, chacune des biellettes peut recevoir un second senseur. Par exemple, chaque biellette peut présenter une face extérieure de forme plane ou cylindrique de révolution, cette face extérieure étant apte à recevoir une jauge de déformation formant un second senseur et présentant deux bornes électriques et un circuit électrique relié à ces deux bornes, la résistance électrique aux bornes de la jauge variant avec la déformation de la face extérieure.

En plus, des signaux respectifs issus des premiers senseurs, le contrôleur peut ainsi traiter les signaux respectifs de chacun des seconds senseurs montés sur chaque biellette. Avantageusement, le système peut comporter trois articulations équipées de trois premiers senseurs et quatre biellettes équipées de quatre seconds senseurs. Les trois premiers senseurs et quatre seconds senseurs sont alors reliés au contrôleur.

En fonction, des déformations des quatre biellettes, le contrôleur en déduit les efforts Fx1', Fy1', Fz1' transmis par le support annulaire au châssis au niveau des pieds des biellettes. A chaque pied de biellettes, ces efforts Fx1', Fy1' sont ainsi mesurés dans un plan XO'Y passant par les directions longitudinales de chaque biellette et par l'axe de rotation de l'arbre tournant. Les efforts Fz1' sont quant à eux mesurés dans la troisième direction Z perpendiculaire au plan XO'Y.

En combinant les efforts Fx1' issus des différents seconds senseurs, le contrôleur détermine alors en totalité un effort Fx2 transmis par le support annulaire au châssis suivant la première direction X parallèlement à l'axe de rotation Axrot de l'arbre tournant.

A partir des efforts Fy1', Fz1' et connaissant la distance entre chaque pied de biellette et l'axe de rotation, le contrôleur peut également déterminer en tout ou partie des efforts Fy2, Fz2 et des moments My2, Mz2 transmis par le support annulaire au châssis. Les efforts Fy2, Fz2 sont orientés selon respectivement les deux directions Y et Z perpendiculaires d'une part par rapport à la première direction X et d'autre part entre eux. Les moments My2, Mz2 sont quant à eux orientés respectivement autour des deuxième et troisième directions Y et Z.

En cumulant les efforts Fx2, Fy2, Fz2 et des moments Mx2, My2, Mz2 appliqués au châssis par le carter au point O et par le support annulaire au point O', le contrôleur en déduit alors les efforts Fx3, Fy3, Fz3 et les couples Mx3, My3, Mz3 appliqués par l'hélice à l'arbre tournant au centre de l'hélice.

L'invention et ses avantages apparaîtront avec plus de détails dans le cadre de la description qui suit avec des exemples donnés à titre illustratif en référence aux figures annexées qui représentent :
la figure 1, une vue en perspective d'une articulation conforme à l'invention,
la figure 2, une vue partielle en coupe d'une articulation conforme à l'invention,
la figure 3, une vue partielle en coupe d'une articulation conforme à l'invention, et
la figure 4, une vue en coupe partielle d'une articulation selon une première variante conforme à l'invention,
la figure 5, une vue en coupe partielle d'une articulation selon une seconde variante conforme à l'invention,
la figure 6, une vue en perspective d'un système conforme à l'invention,
la figure 7, une vue en perspective illustrant en détail une articulation équipant le système conforme à l'invention, et
la figure 8, une vue en coupe partielle d'un système conforme à l'invention.

Les éléments présents dans plusieurs figures distinctes sont affectés d'une seule et même référence.

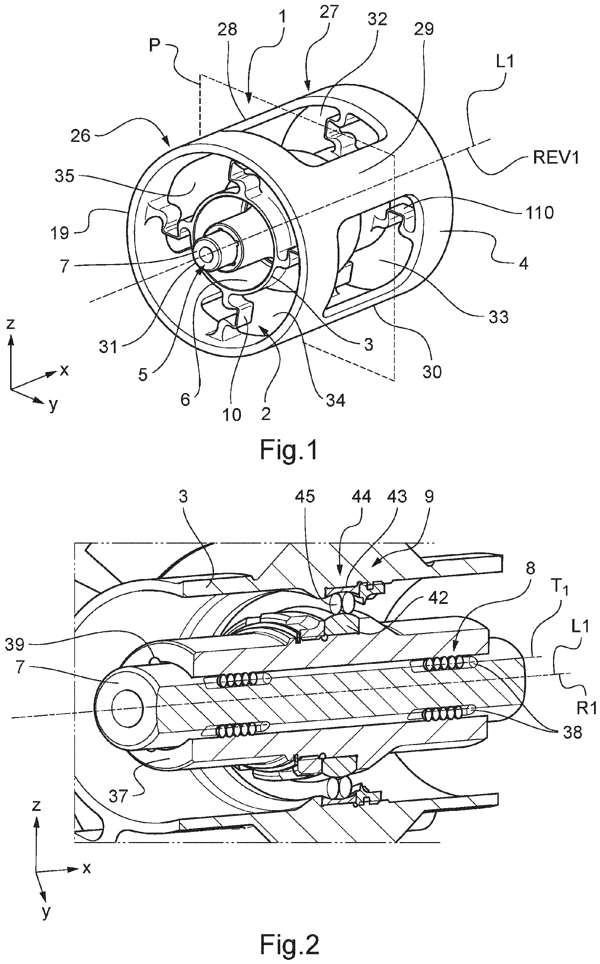

Trois directions X, Y et Z orthogonales les unes par rapport aux autres sont représentées sur les figures 1 à 8.

La première direction X est dite longitudinale. Le terme « longitudinal » est relatif à toute direction parallèle à la première direction X.

La deuxième direction Y est dite transversale. Le terme « transversal » est relatif à toute direction parallèle à la deuxième direction Y.

Enfin, la troisième direction Z est dite en élévation. L'expression « en élévation » est relative à toute direction parallèle à la troisième direction Z.

Comme déjà évoqué, l'invention se rapporte au domaine des articulations déformables élastiquement permettant par exemple d'amortir des vibrations lors de la rotation d'un arbre d'une machine tournante.

Telle que représentée à la figure 1, une telle articulation déformable 1 élastiquement comporte ainsi une portion déformable 2 apte à se déformer dans un domaine élastique entre une portion interne cylindrique 3 et une portion externe cylindrique 4 de l'articulation 1.

Une telle portion déformable 2 peut alors être rendue solidaire par exemple par collage ou par adhérisation avec la portion interne cylindrique 3 et la portion externe cylindrique 4.

Selon une autre alternative de fabrication, la portion déformable 2, la portion interne cylindrique 3 et la portion externe cylindrique 4 peuvent former un ensemble monolithique dans un même matériau par exemple métallique. Dans ce cas, la portion déformable 2, la portion interne cylindrique 3 et la portion externe cylindrique 4 peuvent être réalisées par un procédé d'usinage, de moulage ou encore de fabrication additive par couches.

Grâce à la portion déformable 2, la portion interne cylindrique 3 peut être mobile en translation et/ou en rotation par rapport à la portion externe cylindrique 4, éventuellement selon les trois directions X, Y et Z et de manière privilégiée en translation selon les deuxième et troisième directions Y et Z.

En outre, l'articulation déformable 1 comporte également une interface de liaison 5 agencée en tout ou partie à l'intérieur d'un alésage 6 de la portion interne cylindrique 3.

Une telle interface de liaison 5 comporte alors un arbre 7 connecté directement ou indirectement à la portion interne cylindrique 3. Un tel arbre 7 comporte en outre une longueur s'étendant suivant une direction longitudinale L1 parallèle à la première direction X et traversant l'alésage 6 de la portion interne cylindrique 3.

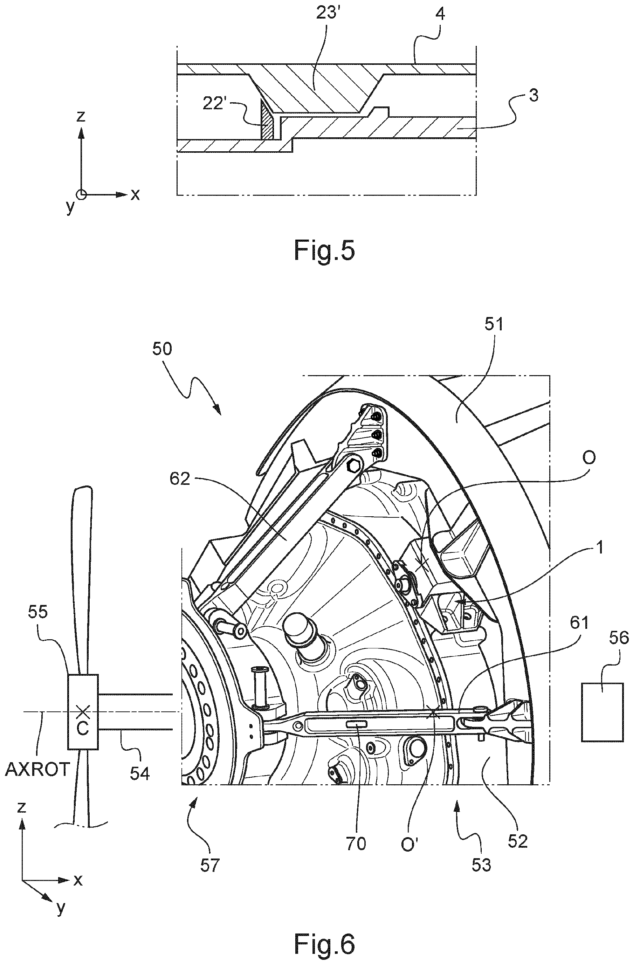

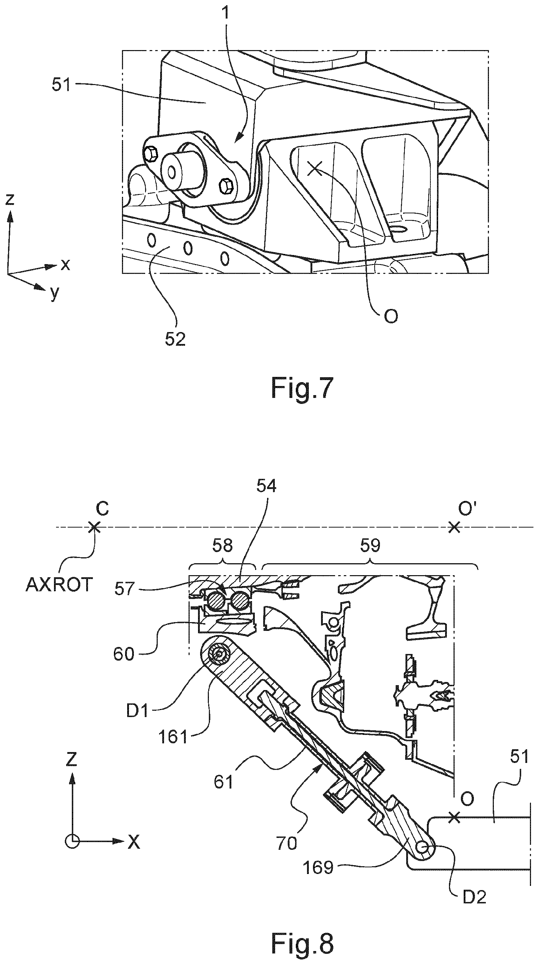

Un tel arbre 7 permet par exemple à la portion interne cylindrique 3 d'être solidarisée avec un châssis 51 d'un système 50 tel que représenté notamment aux figures 6 et 7.

La portion externe cylindrique 4 peut quant à elle être solidarisée avec un carter 52 d'une boîte de transmission de puissance 53.

Bien entendu, un tel agencement est donné à titre d'exemple non limitatif. Selon une autre alternative, la portion interne cylindrique 3 peut alors être solidarisée avec le carter 52 d'une boîte de transmission de puissance 53 tandis que la portion externe cylindrique 4 peut quant à elle être solidarisée le châssis 51.

Telle que représentée en détail à la figure 2, l'interface de liaison 5 comporte alors au moins un organe de guidage en translation 8 comportant par exemple une ou plusieurs rangées rectilignes billes. De tels organes de guidage en translation 8 permettent ainsi de guider en translation selon une direction T1, parallèle à la direction longitudinale L1, la portion interne cylindrique 3 par rapport à l'arbre 7.

Par suite, les organes de guidage en translation 8 sont agencés dans des gorges 38 ménagées dans l'arbre 7 et orientées parallèlement à la direction longitudinale L1 de l'arbre 7. Les organes de guidage en translation 8 peuvent également coopérer avec des gorges complémentaires 39 ménagées dans la portion interne cylindrique 3.

L'arbre 7 présente ainsi un degré de liberté en translation par rapport à la portion interne cylindrique 3 selon une direction de translation T1 parallèle à la direction longitudinale L1.

Telle que représentée, l'interface de liaison 5 peut notamment comporter deux groupes de cinq rangées rectilignes de cinq billes formant les organes de guidage en translation 8 entre l'arbre 7 et la portion interne cylindrique 3.

Selon l'exemple d'articulation 1 illustrée à la figure 1, la portion externe cylindrique 4 peut quant à elle présenter un premier bord 26 agencé d'un premier côté 19 de l'articulation 1 et un second bord 27 agencé d'un second côté 20 de l'articulation 1. Le premier côté 19 et le second côté 20 de l'articulation 1 sont définis comme étant agencés de part et d'autre d'un plan médian P perpendiculaire à la première direction X.

Par ailleurs, au moins deux liaisons 28, 29, 30, 31 peuvent alors relier le premier bord 26 avec le second bord 27 en définissant au moins deux évidements 32, 33, 34, 35 agencés de manière équirépartie en azimut autour d'un axe de révolution REV1 de la portion externe cylindrique 4.

En outre, l'interface de liaison 5 peut également comporter au moins un organe de guidage en rotation 9 autour d'au moins la direction longitudinale L1. Ledit au moins un organe de guidage en rotation 9 peut comporter un palier 44 tel un roulement à billes comportant deux rangées circulaires de billes 45.

Ce palier 44 est ainsi agencé entre l'arbre 7 et la portion interne cylindrique 3. L'arbre 7 présente alors au moins un degré de liberté en rotation par rapport à la portion interne cylindrique 3, ce degré de liberté en rotation étant orienté selon une direction de rotation R1 parallèle à la direction longitudinale L1 et donc à la première direction X.

En outre, les deux rangées circulaires de billes 45 peuvent être agencées entre une bague intérieure 42 du palier 44 solidaire d'un fourreau 37 et une bague extérieure 43 du palier 44 solidaire de la portion interne cylindrique 3.

Avantageusement, un tel palier 44 peut alors également former une rotule à billes à trois degrés de liberté en rotation autour des trois directions X, Y et Z.

Dans ce cas, l'arbre 7 est alors agencé par rapport à la portion interne cylindrique 3 selon une liaison de type linéaire annulaire à un degré de liberté en translation selon la première direction X et à trois degrés de liberté en rotation autour des directions X, Y et Z.

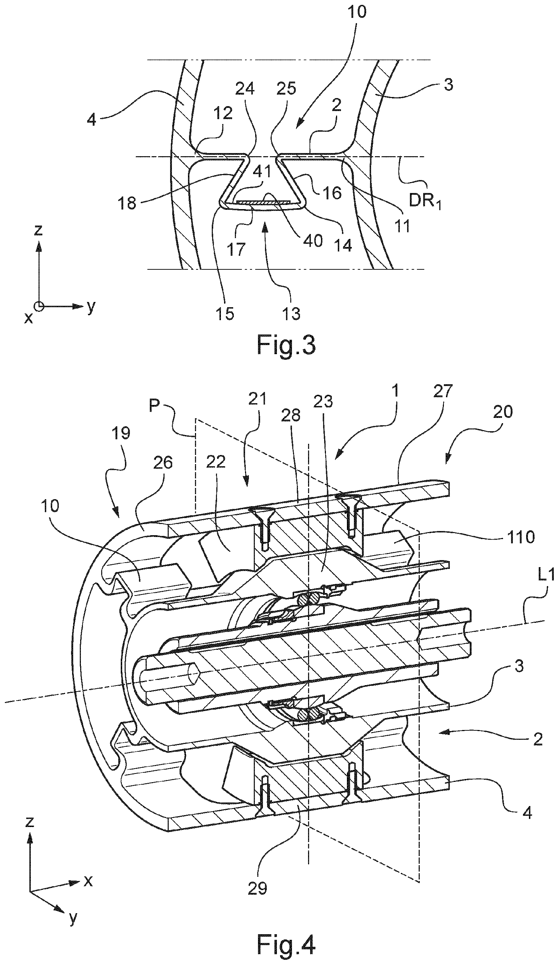

Par ailleurs, telle que représentée à la figure 1, la portion déformable 2 peut comporter une pluralité de liens déformables 10. Tel que représenté en détail à la figure 3, chaque lien déformable 10 peut alors comporter une première extrémité 11 solidaire de la portion interne cylindrique 3 et une seconde extrémité 12 solidaire de la portion externe cylindrique 4.

Chaque lien déformable 10 peut comporter alors une partie centrale 13 agencée en concertina à au moins deux changements de direction 14, 15, 24, 25. Eventuellement, la partie centrale 13 de chaque lien déformable 10 comporte successivement un premier flan incliné 16 par rapport à une direction radiale DR1 s'étendant entre la première extrémité 11 et la seconde extrémité 12, un tronçon intermédiaire 17 parallèle à la direction radialeDR1 et un second flan incliné 18 par rapport à la direction radiale DR1.

Le premier flan incliné 16 forme alors un premier changement de direction 14 avec le tronçon intermédiaire 17 et le tronçon intermédiaire 17 forme quant à lui un second changement de direction 15 avec le second flan incliné 18.

Chaque lien déformable 10 peut en outre comporter deux autres changements de direction 24, 25. Un troisième changement de direction 24 est ainsi opéré entre la première extrémité 11 et le premier flan incliné 16. Un quatrième changement de direction 25 est quant à lui opéré entre le second flan incliné 18 et la seconde extrémité 12.

Par ailleurs, telle que représentée à la figure 1, la portion déformable 2 peut comporter au moins deux premiers liens déformables 10 agencés au niveau du premier côté 19 de l'articulation 1 et au moins deux seconds liens déformables 110 agencés au niveau du second côté 20 de l'articulation 1.

De plus, l'articulation 1 peut comporter des premiers senseurs de déformation 40 agencés sur la portion déformable 2.

Plus précisément, chaque premier senseur de déformation 40 peut être rapporté sur une face 41 d'un lien déformable 10, 110.

Telle que représentée aux figures 4 et 5, l'articulation 1 peut comporter au moins une butée 21 apte à limiter des déformations de la portion déformable 2 par exemple selon l'une au moins des trois directions X, Y et Z.

Selon une première variante d'articulation représentée à la figure 4, cette butée 21 peut présenter une première configuration dans laquelle au moins un patin 22 est solidaire de la portion externe cylindrique 4 et au moins une excroissance de révolution 23 est solidaire de la portion interne cylindrique 3.

Selon une seconde variante d'articulation représentée à la figure 5, cette butée 21 peut présenter une seconde configuration dans laquelle au moins un patin 22' est solidaire de la portion interne cylindrique 3 et au moins une excroissance de révolution 23' est solidaire de la portion externe cylindrique 4.

Dans ce cas, le ou les patins 22 peuvent par exemple être rapportés suivant la première direction X et venir en contact contre un épaulement de la portion interne cylindrique 3. Un tel épaulement est alors agencé dans le plan formé par les directions Y et Z.

De tels patins 22,22' peuvent ainsi être par exemple rapportés et maintenus en position par des moyens de solidarisation réversible tels que des vis ou des écrous aptes à exercer une force de serrage.

En outre, les évidements 32-35 représentés à la figure 1, peuvent permettre l'introduction et la mise en place des patins 22 autour d'une excroissance de révolution 23. Une fois introduit, chaque patin 22 est alors placé en regard d'une liaison 28, 29, 30, 31 et solidarisé avec cette liaison 28-31 à l'aide d'au moins une vis traversant la liaison 28-31.

Telle que représentée à la figure 6, l'invention se rapporte également à un système 50 comportant un châssis 51, un carter 52 d'une boîte de transmission de puissance 53 coopérant avec le châssis 51, un arbre tournant 54 mobile en rotation par rapport au carter 52 autour d'un axe de rotation Axrot, un organe d'extrémité 55 entraîné en rotation par l'arbre tournant 54 et un contrôleur 56 configuré pour déterminer des sollicitations transmises à l'arbre tournant 54.

Ces sollicitations transmises à l'arbre tournant 54 sont en outre générées lors du mouvement de rotation de l'organe d'extrémité 55 par rapport au châssis 51.

Un tel système 50 comporte alors au moins une articulation 1 telle que précédemment décrite. Telle que représentée à la figure 7, cette ou ces articulations sont agencées entre le châssis 51 et le carter 52. Eventuellement, le système 50 peut comporter trois articulations 1 agencées de manière équirépartie à 120° autour de l'axe de rotation Axrot.

Des premiers senseurs de déformation 40 sont alors agencés au niveau de la portion déformable 2 de chaque articulation 1 et sont reliés au contrôleur 56.

Par premier senseur de déformation, on entend ici un capteur physique capable de mesurer directement une déformation tel qu'une jauge de déformation mais aussi un système pouvant comprendre un ou plusieurs capteur(s) physique(s) ainsi que des moyens de traitement du signal permettant de fournir une estimation de cette déformation à partir des mesures fournies par ces capteurs physiques. De manière similaire, on désignera par mesure de cette déformation aussi bien une mesure brute d'un capteur physique qu'une mesure obtenue par un traitement de signal plus ou moins complexe à partir de mesures brutes.

Un tel système 50 est ainsi en mesure de déterminer les efforts Fy1, Fz1 transmis par le carter 52 au châssis 51 au niveau de chaque articulation 1. Ces efforts Fy1, Fz1 sont ainsi mesurés selon les directions Y et Z dans un plan YOZ perpendiculaire à l'axe de rotation Axrot de l'arbre tournant 54.

A partir de ces efforts Fy1, Fz1 appliqués à chaque centre O d'une articulation 1 et connaissant la distance entre centre O et l'axe de rotation Axrot, le contrôleur 56 calcule alors en totalité un moment Mx2 autour de la première direction X transmis par le carter 52 au châssis 51 en un point O' agencé sur l'axe de rotation Axrot. A partir de ce couple Mx2, le contrôleur 56 en déduit le couple résistant généré par l'organe d'extrémité 55 sur l'arbre tournant 54 selon l'axe de rotation Axrot parallèle avec la première direction X.

Eventuellement, le contrôleur 56 peut également déterminer en tout ou partie des efforts Fy2, Fz2 et des couples My2, Mz2 transmis par le carter 52 au châssis 51 appliqué au point O'. Les efforts Fy2, Fz2 sont orientés selon respectivement la deuxième direction Y et la troisième direction Z. Les couples My2, Mz2 sont quant à eux orientés respectivement autour des deuxième et troisième directions Y et Z.

Par ailleurs, un tel système 50 peut comporter au moins un palier 57 de guidage en rotation de l'arbre tournant 54. Ce ou ces paliers 57 sont alors agencés dans une zone extérieure 58 déportée par rapport à une zone intérieure 59 du carter 52. Le ou les paliers 57 peuvent notamment comporter un roulement à billes présentant une ou deux rangées circulaires de billes agencées autour de l'axe de rotation Axrot.

Ce ou ces paliers 57 sont en outre agencés dans un support annulaire 60 localisé entre l'organe d'extrémité 55 et le carter 52 suivant la première direction X parallèle à l'axe de rotation Axrot.

Pour maintenir en position ce support 60 par rapport au carter 52, le système 50 peut comporter au moins deux biellettes 61, 62. Ces biellettes 61, 62 peuvent être par exemple au nombre de quatre et être agencées de manière équirépartie à 90° en azimut autour de la première direction X et donc de l'axe de rotation Axrot de l'arbre tournant 54.

Chaque biellette 61, 62 comporte en outre une tête 161 liée avec le support annulaire 60 et un pied 162 lié avec le châssis 51. Chaque tête 161 présent au moins un degré de liberté en rotation, et préférentiellement trois degrés de liberté en rotation, avec le support annulaire 60. Chaque pied 162 présente quant à lui au moins un degré de liberté en rotation, et préférentiellement trois degrés de liberté en rotation, avec le châssis 51.

Tel que représenté à la figure 8, lorsque la tête 161 et le pied 162 d'une même biellette 61 comportent respectivement un unique degré de liberté en rotation, ces degrés de liberté sont respectivement orientés selon deux directions D1, D2 parallèles entre elles et perpendiculaires à l'axe de rotation Axrot de l'arbre tournant 54.

En outre, le système 50 peut comporter au moins un second senseur de déformation 70 agencé sur au moins une biellette 61, ce ou ces seconds senseurs de déformation 70 sont alors reliés au contrôleur 56.

En fonction, des déformations des quatre biellettes 61, 62, le contrôleur 56 en déduit les efforts Fx1', Fy1', Fz1' transmis par le support annulaire 60 au châssis 51 au niveau des pieds 162 des biellettes 61, 62. A chaque pied 162 de biellettes, ces efforts Fx1', Fy1' sont ainsi mesurés dans un plan XO'Y passant par les directions longitudinales de chaque biellette 61,62 et par l'axe de rotation Axrot de l'arbre tournant 54. Les efforts Fz1' sont quant à eux mesurés dans la troisième direction Z perpendiculaire au plan XO'Y.

En combinant suivant une loi mémorisée les efforts Fx1' issus des différents seconds senseurs 70, le contrôleur 56 détermine alors en totalité un effort Fx2 transmis par le support annulaire 60 au châssis 51 suivant la première direction X parallèlement à l'axe de rotation Axrot de l'arbre tournant 54.

A partir des efforts Fy1', Fz1' et connaissant la distance entre chaque pied 162 de biellette et l'axe de rotation Axrot, le contrôleur 56 peut également déterminer selon une loi mémorisée en tout ou partie des efforts Fy2, Fz2 et des moments My2, Mz2 transmis par le support annulaire 60 au châssis 51. Les efforts Fy2, Fz2 sont orientés selon respectivement les deuxième et troisième directions Y et Z. Les moments My2, Mz2 sont quant à eux orientés respectivement autour des deuxième et troisième directions Y et Z.

En cumulant les efforts Fx2, Fy2, Fz2 et des moments Mx2, My2, Mz2 appliqués au châssis 51 par le carter 52 au point O et par le support annulaire 60 au point O', le contrôleur 56 en déduit alors selon une loi mémorisée les efforts Fx3, Fy3, Fz3 et les couples Mx3, My3, Mz3 appliqués par l'organe d'extrémité 55 à l'arbre tournant 54 en un point C agencé sensiblement au centre de l'hélice par exemple.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Articulation déformable (1) élastiquement comportant une portion déformable (2) et une portion interne cylindrique (3) agencée en tout ou partie à l'intérieur d'une portion externe cylindrique (4), ladite portion déformable (2) étant solidaire de ladite portion interne cylindrique (3) et de ladite portion externe cylindrique (4), ladite portion interne cylindrique (3) étant mobile par rapport à ladite portion externe cylindrique (4), ladite articulation déformable (1) comportant une interface de liaison (5) agencée en tout ou partie à l'intérieur d'un alésage (6) de ladite portion interne cylindrique (3), ladite interface de liaison (5) comportant un arbre (7) connecté à ladite portion interne cylindrique (3), ledit arbre (7) s'étendant suivant une direction longitudinale (L1) traversant ledit alésage (6),
ladite interface de liaison (5) comportant au moins un organe de guidage en translation (8) parallèlement à ladite direction longitudinale (L1), ledit au moins un organe de guidage en translation (8) étant agencé entre ledit arbre (7) et ladite portion interne cylindrique (3), ledit arbre (7) présentant un degré de liberté en translation par rapport à ladite portion interne cylindrique (3), ledit degré de liberté en translation étant orienté selon une direction de translation (T1) parallèle à ladite direction longitudinale (L1),
ladite portion déformable (2) comportant une pluralité de liens déformables (10, 110), chaque lien déformable (10, 110) comportant une première extrémité (11) solidaire de ladite portion interne cylindrique (3) et une seconde extrémité (12) solidaire de ladite portion externe cylindrique (4),
**caractérisée en ce que** chaque lien déformable (10, 110) comporte une partie centrale (13) agencée en concertina à au moins deux changements de direction (14, 15, 24, 25).

2. Articulation selon la revendication 1,
**caractérisée en ce que** ladite interface de liaison (5) comporte au moins un organe de guidage en rotation (9) autour d'au moins ladite direction longitudinale (L1), ledit au moins un organe de guidage en rotation (9) étant agencé entre ledit arbre (7) et ladite portion interne cylindrique (3), ledit arbre (7) présentant au moins un degré de liberté en rotation par rapport à ladite portion interne cylindrique (3), ledit au moins un degré de liberté en rotation comportant au minimum un degré de liberté en rotation orienté selon une direction de rotation (R1) parallèle à ladite direction longitudinale (L1).

3. Articulation selon la revendication 1,
**caractérisée en ce que** ladite partie centrale (13) de chaque lien déformable (10, 110) comporte successivement un premier flan incliné (16) par rapport à une direction radiale (DR1) s'étendant entre ladite première extrémité (11) et ladite seconde extrémité (12), un tronçon intermédiaire (17) parallèle à ladite direction radiale(DR1) et un second flan incliné (18) par rapport à ladite direction radiale (DR1), ledit premier flan incliné (16) formant un premier changement de direction (14) avec ledit tronçon intermédiaire (17) et ledit tronçon intermédiaire (17) formant un second changement de direction (15) avec ledit second flan incliné (18).

4. Articulation selon l'une quelconque des revendications 1 ou 3
**caractérisée en ce que** ladite portion déformable (2) comporte au moins deux premiers liens déformables (10) agencés au niveau d'un premier côté (19) de ladite articulation (1) et au moins deux seconds liens déformables (110) agencés au niveau d'un second côté (20) de ladite articulation (1), lesdits premier côté (19) et second côté (20) étant définis de part et d'autre d'un plan médian (P) perpendiculaire à ladite direction longitudinale (L1).

5. Articulation selon l'une quelconque des revendications 1 à 4,
**caractérisée en ce que** ladite articulation (1) comporte au moins une butée (21) apte à limiter des déformations de ladite portion déformable (2).

6. Articulation selon la revendication 5,
**caractérisée en ce que** ladite butée (21) présente une configuration choisie parmi le groupe comportant une première configuration dans laquelle au moins un patin (22) est solidaire de ladite portion externe cylindrique (4) et au moins une excroissance de révolution (23) est solidaire de ladite portion interne cylindrique (3) et une seconde configuration dans laquelle au moins un patin (22') est solidaire de ladite portion interne cylindrique (3) et au moins une excroissance de révolution (23') est solidaire de ladite portion externe cylindrique (4).

7. Articulation selon l'une quelconque des revendications 1 à 6,
**caractérisée en ce que** ladite portion externe cylindrique (4) présente un premier bord (26) agencé du premier côté (19) de ladite articulation (1), un second bord (27) agencé du second côté (20) de ladite articulation (1), au moins deux liaisons (28, 29, 30, 31) reliant ledit premier bord (26) avec ledit second bord (27), lesdites au moins deux liaisons (28, 29, 30, 31) définissant au moins deux évidements (32, 33, 34, 35) agencés de manière équirépartie en azimut autour d'un axe de révolution (REV1) de ladite portion externe cylindrique (4).

8. Articulation selon l'une quelconque des revendications 1 à 7,
**caractérisée en ce que** ladite articulation (1) comporte des premiers senseurs de déformation (40) agencés sur ladite portion déformable (2).

9. Articulation selon la revendication 8,
**caractérisée en ce que**, ladite portion déformable (2) comportant une pluralité de liens déformables (10, 110), chaque premier senseur de déformation (40) est rapporté sur une face (41) d'un lien déformable (10, 110).

10. Système (50) comportant au moins :
• un châssis (51),
• un carter (52) d'une boîte de transmission de puissance (53) coopérant avec ledit châssis (51),
• un arbre tournant (54) mobile en rotation par rapport audit carter (52) autour d'un axe de rotation (Axrot),
• un organe d'extrémité (55) entraîné en rotation par ledit arbre tournant (54), et
• un contrôleur (56) configuré pour déterminer des sollicitations transmises audit arbre tournant (54), lesdites sollicitations étant générées lors du mouvement de rotation dudit organe d'extrémité (55),
**caractérisé en ce que** ledit système (50) comporte au moins une articulation (1) selon l'une quelconque des revendications 8 à 9, ladite articulation (1) étant agencée entre ledit châssis (51) et ledit carter (52), lesdits premiers senseurs de déformation (40) agencés au niveau de ladite portion déformable (2) de chaque articulation (1) étant reliés audit contrôleur (56).

11. Système selon la revendication 10,
**caractérisé en ce que** ledit système (50) comporte au moins un palier (57) de guidage en rotation dudit arbre tournant (54), ledit au moins un palier (57) étant agencé dans une zone extérieure (58) par rapport à une zone intérieure (59) dudit carter (52), ledit au moins un palier (57) étant monté dans un support annulaire (60), ledit au moins un palier (57) étant agencé entre ledit carter (52) et ledit organe d'extrémité (55) suivant une direction parallèle audit axe de rotation (Axrot).

12. Système selon la revendication 11,
**caractérisé en ce que** ledit système (50) comporte au moins deux biellettes (61, 62), lesdites au moins deux biellettes (61, 62) étant agencées de manière équirépartie en azimut autour dudit axe de rotation (Axrot) dudit arbre tournant (54), chaque biellette (61, 62) comportant une tête (161) liée avec ledit support annulaire (60) et un pied (162) lié avec ledit châssis (51), chaque tête (161) présentant au moins un degré de liberté en rotation avec ledit support annulaire (60), chaque pied (162) présentant au moins un degré de liberté en rotation avec ledit châssis (51), ledit au moins un degré de liberté en rotation de ladite tête (161) et ledit au moins un degré de liberté en rotation dudit pied (162) d'une même biellette (61) étant respectivement orientés selon deux directions (D1, D2) parallèles entre elles et perpendiculaires audit axe de rotation (Axrot) dudit arbre tournant (54).

13. Système selon la revendication 12,
**caractérisé en ce que** ledit système (50) comporte au moins un second senseur de déformation (70) agencé sur au moins une biellette (61), ledit au moins un second senseur de déformation (70) étant relié audit contrôleur (56).
